# EUROPEAN PATENT APPLICATION

(11) **EP 2 357 498 A1**
(43) Date of publication of application: **17.08.2011**
(21) Application number: 09827551.4
(22) Date of filing: 17.11.2009
(51) Int. Cl.: G02B 5/30, G02B 6/06, G02B 6/08

(54) **PHASE PLATE AND PHASE PLATE MANUFACTURING METHOD**

(30) Priority: 19.11.2008 JP 2008295664
(71) Applicant: Sumitomo Electric Industries, Ltd., Chuo-ku Osaka-shi Osaka 541-0041 (JP)
(72) Inventor: SASAOKA Eisuke, Yokohama-shi Kanagawa 244-8588 (JP)
(74) Representative: HOFFMANN EITLE
(86) International application number: PCT/JP2009/069489
(87) International publication number: WO 2010/058770

(57) **Abstract**

The invention relates to a phase plate which is easy to manufacture such as to have a desirable characteristic and the like. The phase plate (10) is substantially shaped like a circular cylinder and has a fixed refractive index in a direction along a center axis (AX) of the circular cylinder. The phase plate (10) also has plural regions (11-18) sequentially arranged as concentric circles from the center in a cross section perpendicular to the center axis (AX). The boundary between two adjacent regions in the regions (11-18) can be distinguished by the difference between refractive indexes. Each of the regions (11, 13, 15, 17) has a refractive index n₁ while each of the regions (12, 14, 16, 18) has a refractive index n₂ (≠ n₁).

## Description

### Technical Field

The present invention relates to a phase plate and a phase plate manufacturing method.

### Background Art

Patent Document 1 discloses an invention which converts higher-order mode light propagating through a multimode optical fiber into light having a Gaussian distribution by using a phase plate. The phase plate used in Patent Document 1 is constituted by a silica glass sheet having a main face formed with a depression shaped like concentric rings with a depth of 1.2 µm and generates a phase difference by using the difference between the respective refractive indexes of the silica glass and the air within the depression. Though Patent Document 1 describes no phase plate manufacturing method, the phase plate seems to be made by forming concentric ring-shaped depression patterns on one surface of the silica glass sheet by etching.

Patent Document 2 discloses an invention in which the coherence of light outputted from a narrow bandwidth light source is reduced by a phase plate, so as to inhibit interference fringes from occurring. It also discloses a method of manufacturing the phase plate. The phase plate manufacturing method disclosed in Patent Document 2 makes the phase plate by irradiating a crystal material with a converged laser beam. That is, the phase plate is obtained by forming the crystal material with a number of refractive-index-changed positions, where the refractive index is changed locally, by irradiation with the laser beam.

### Citation List

### Patent Document

Patent Document 1: U.S. Patent Application Laid-Open No. 2008/0219620
Patent Document 2: Japanese Patent Application Laid-Open No. 11-246298

### Disclosure of the Invention

### Problems that the Invention is to Solve

The present inventors have studied the conventional phase plates in detail, and as a result, have discovered the following problems.

That is, it is not easy for the phase plates disclosed in Patent Documents 1 and 2 to be made such as to have desirable characteristics. For example, as shown in Figs. 10a and 10c in Patent Document 1, a performance (power conversion efficiency from the higher-order mode light to the light having a Gaussian distribution) of the phase plate disclosed in Patent Document 1 greatly depends on the precisions in position and depth of the depression pattern formed like concentric rings in the silica glass. Therefore, it is not easy for the phase plate disclosed in Patent Document 1 to be made such as to have a desirable characteristic. In the phase plate disclosed in Patent Document 2, on the other hand, a number of positions in the crystal material must be sequentially irradiated with the converged laser beam in order to cause local refractive index changes there. Hence, it takes a long time to make the phase plate disclosed in Patent Document 2, whereby the phase plate cannot be manufactured easily.

The present invention has been developed to eliminate the problems described above. It is an object of the present invention to provide a phase plate which is easy to manufacture such as to have a desirable characteristic and a method for manufacturing such a phase plate.

### Means for Solving the Problems

The phase plate according to the present invention has a light entrance surface and a light exit surface opposing each other and has a refractive index which is stable in a direction along a predetermined axis intersecting both of the light entrance surface and light exit surface. The phase plate also has plural regions whose boundaries are distinguished by a difference between refractive indexes in a cross section perpendicular to the predetermined axis.

Preferably, in the phase plate according to the present invention, each of the plural regions is an assembly of plural sub regions each having a fixed refractive index in both of the direction along the predetermined axis and the cross section. Preferably, at least a part of each of the plural regions is comprised of silica glass. Preferably, the refractive index difference between adjacent regions in the plural regions is set according to whether or not there is silica glass, whether or not there is an additive to silica glass, or a difference in the concentration of the additive in silica glass.

The phase plate manufacturing method according to the present invention comprises at least an assembling step, an elongating step, and a cutting step. The assembling step bundles plural members each having a rod or pipe form and exhibiting a fixed refractive index along a longitudinal direction thereof. The elongating step longitudinally elongates the plural members bundled in the assembling step while heating them to soften, so as to form an elongated body. The cutting step cuts the elongated body formed in the elongating step along a plane perpendicular to the longitudinal direction, so as to yield a phase plate having the structure mentioned above (the phase plate according to the present invention).

### Effects of the Invention

The present invention can provide a phase plate which is easy to manufacture such as to have a desirable characteristic.

### Brief Description of the Drawings

Fig. 1 is a view showing the structure of a first embodiment of the phase plate according to the present invention;
Fig. 2 is a flowchart for explaining a method for manufacturing the phase plate according to the first embodiment;
Fig. 3 is a view for explaining each of the assembling step S1, elongating step S2, and cutting step S3 in the method for manufacturing the phase plate according to the first embodiment;
Fig. 4 is a perspective view showing the structure of a second embodiment of the phase plate according to the present invention; and
Fig. 5 is a view for explaining the assembling step S 1 in a method for manufacturing the phase plate according to the second embodiment.

### Best Modes for Carrying Out the Invention

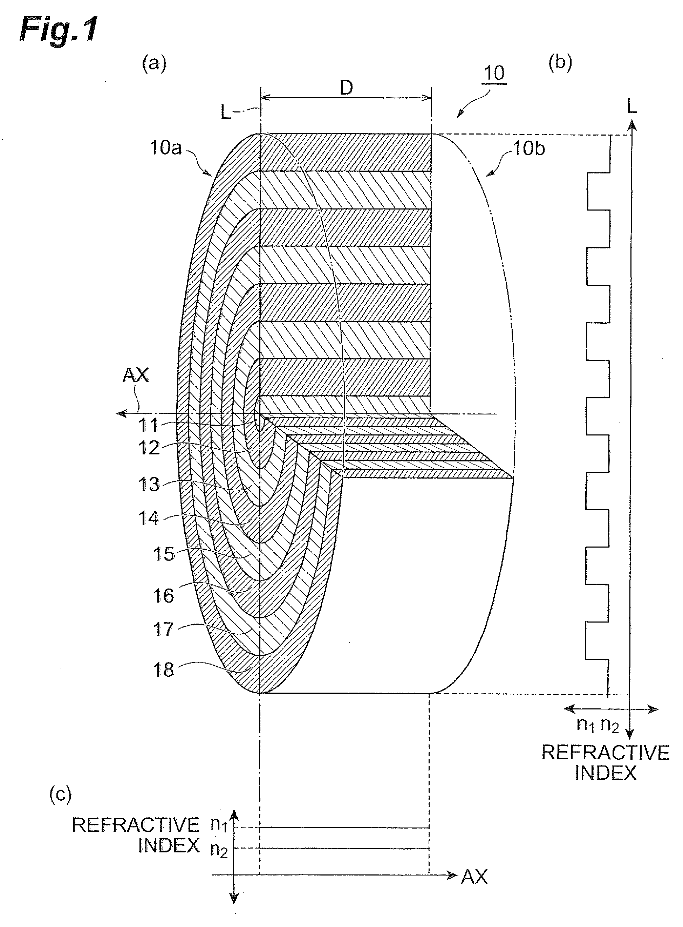

In the following, embodiments of the phase plate and manufacturing method thereof according to the present invention will be explained in detail with reference to Figs. 1 to 5. In the description of the drawings, identical or corresponding components are designated by the same reference numerals, and overlapping description is omitted.

### (First Embodiment)

To begin with, the first embodiment will be explained. Fig. 1 is a view showing the structure of the first embodiment of the phase plate according to the present invention. In particular, Fig. 1(a) is a perspective view showing the structure of a phase plate 10 according to the first embodiment, Fig. 1(b) is a refractive index profile of the phase plate 10 along a line L in a cross section perpendicular to a center axis AX, and Fig. 1(c) is a refractive index profile of the phase plate 10 in a direction along the center axis AX. The phase plate 10 shown in Fig. 1(a) is substantially shaped like a circular cylinder with a thickness D while having a light entrance surface 10a and a light exit surface 10b which oppose each other. The phase plate 10 has a fixed refractive index in a direction along the center axis AX of the circular cylinder, while regions 11 to 18 are sequentially arranged from the center in a cross section perpendicular to the center axis AX (i.e., a plane which is parallel to the light entrance surface 10a and light exit surface 10b). The boundaries between adjacent pairs of regions in the regions 11 to 18 are concentric circles about the center axis AX. Thus, each of the regions 11, 13, 15, 17 has a refractive index n₁, while each of the regions 12, 14, 16, 18 has a refractive index n₂ (# n₁).

Therefore, as shown in Fig. 1(b), the refractive index profile along the line L on the light entrance surface 10a has a form in which the refractive indexes n₁ and n₂ are periodically repeated. On the other hand, as shown in Fig. 1(c), the refractive index profile in the direction along the center axis AX has a form in which the refractive index is fixed in the direction along the center axis AX whether the center axis AX penetrates through the regions having the refractive index n₁ or the regions having the refractive index n₂.

Preferably, in the phase plate 10 having the above-mentioned structure (Fig. 1), at least a part of each of the regions 11 to 18 is comprised of silica glass. Preferably, the refractive index difference between two adjacent regions (e.g., between the regions 11 and 12 or between the regions 12 and 13) in the regions 11 to 18 is set according to whether or not there is silica glass, whether or not there is an additive to silica glass, or a difference in the concentration of the additive in silica glass.

Preferably, each of the regions 11 to 18 is an assembly of a plural sub regions having a fixed refractive index in both of the direction along the center axis AX and the cross section. For example, each of the regions 11 to 18 may be an assembly of sub regions comprised of silica glass and sub regions constituted by a gas such as air in gaps between the former sub regions. When manufacturing the phase plate 10 by hollow pipes, each of the regions 11 to 18 may be an assembly of sub regions constituted by material parts of the hollow pipes and sub regions constituted by a gas such as air within the hollow pipes (inner spaces of the hollow pipes).

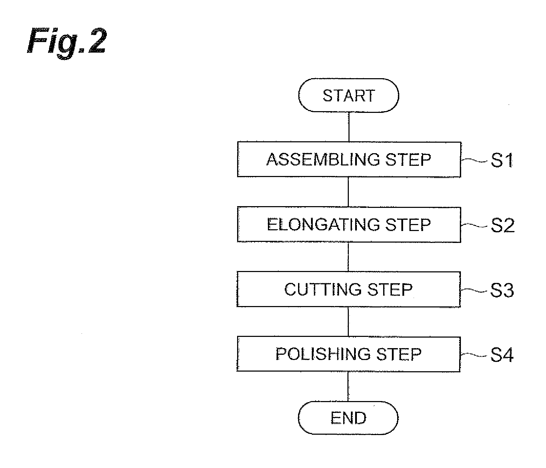

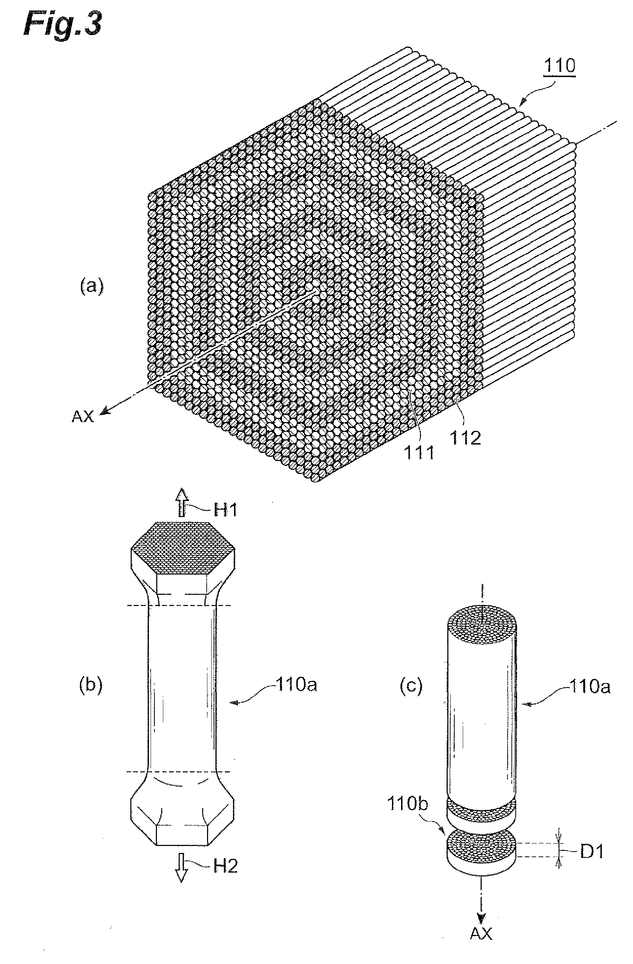

Fig. 2 is a flowchart for explaining a method for manufacturing the phase plate 10 according to the first embodiment. The phase plate manufacturing method according to the first embodiment comprises an assembling step S1, an elongating step S2, a cutting step S3, and a polishing step S4 and executes the steps S1 to S4 sequentially, thereby manufacturing the phase plate 10. Fig. 3 is a view for explaining each of the assembling step S1, elongating step S2, and cutting step S3 in the method for manufacturing the phase plate 10 according to the first embodiment. In particular, Fig. 3(a) is a sectional view of an assembly 110 formed by the assembling step S1 as taken perpendicular to the longitudinal direction thereof (coinciding with the center axis AX), Fig. 3(b) is a view showing an elongated body 110a obtained by elongating the assembly 110, and Fig. 3(c) is a view showing the cutting step S3 of yielding the phase plate 10 with the thickness D by cutting the elongated body 110a along a plane perpendicular to the longitudinal direction thereof.

The assembling step S1 bundles plural rods 111 having the uniform refractive index n₁ in the longitudinal direction and plural rods 112 having the uniform refractive index n₂ in the longitudinal direction as shown in Fig. 3(a). That is, plural rods 111, 112 are bundled such that the refractive index profile in a cross section perpendicular to the longitudinal direction is substantially similar to the refractive index profile in the cross section of the phase plate 10 (Fig. 1(b)), whereby the assembly 110 is formed. In particular, (1) plural rods 111 are bundled so as to form a first assembly layer corresponding to the region 11, (2) plural rods 112 are bundled about the first assembly layer so as to form a second assembly layer corresponding to the region 12, (3) plural rods 111 are bundled about the second assembly layer so as to form a third assembly layer corresponding to the region 13, (4) plural rods 112 are bundled about the third assembly layer so as to form a fourth assembly layer corresponding to the region 14, (5) plural rods 111 are bundled about the fourth assembly layer so as to form a fifth assembly layer corresponding to the region 15, (6) plural rods 112 are bundled about the fifth assembly layer so as to form a sixth assembly layer corresponding to the region 16, (7) plural rods 111 are bundled about the sixth assembly layer so as to form a seventh assembly layer corresponding to the region 17, and (8) plural rods 112 are bundled about the seventh assembly layer so as to form an eighth assembly layer corresponding to the region 18, whereby the assembly 110 shown in Fig. 3(a) is obtained.

The plural rods may be bundled in any order, e.g., sequentially from the center to the outer periphery or sequentially from the bottom to the top. Preferably, at this time, the region where the rods 111 are bundled and the region where the rods 112 are bundled are arranged such as to form concentric circles after being elongated as shown in Fig. 1(a).

Preferably, in the assembly 110, the bundled plural rods 111, 112 are accommodated within an assembling pipe. The plural rods 111, 112 preferably have the same outer diameters and preferably are close-packed. The plural rods 111, 112 are comprised of transparent materials such as silica glass, for example.

As each of the plural rods 111, 112 has a smaller diameter, i.e., as a greater number of rods 111, 112 are bundled in the assembling step S1, the refractive index profile along a predetermined line on a cross section of the assembly 110 becomes more similar to the refractive index profile on the cross section of the phase plate 10 (Fig. 1(b)).

The elongating step S2 elongates the assembly 110, in which the plural rods 111, 112 were bundled in the assembling step S1, in the longitudinal direction (coinciding with the center axis AX) in a state softened by heating as shown in Fig. 3(b). That is, both ends of the assembly 110 are elongated in the directions of arrows H1, H2, respectively, whereby the elongated body 110a is formed. The cutting step S3 cuts the elongated body 110a formed in the elongating step S2 along a plane perpendicular to the longitudinal direction (coinciding with the center axis AX) as shown in Fig. 3(c). This yields a phase plate element 110b with a thickness D1 (> D) having surfaces to become the light entrance surface 10a and light exit surface 10b opposing each other. Here, taking account of the reduction in thickness during the polishing step S4 subsequent thereto, the phase plate element 110b having the thickness D1 is cut out such as to attain the desirable thickness D after being polished. The polishing step S4 optically polishes the cut surfaces (to become the light entrance surface 10a and light exit surface 10b, respectively) of the phase plate element 110b cut out in the cutting step S3. That is, each of the light entrance surface 10a and light exit surface 10b of the phase plate 10 finally obtained through the polishing step S4 becomes a flat surface.

For example, the following assumes a case where a phase plate having a function on a par with that of the phase plate disclosed in Patent Document 1 is accomplished by the phase plate 10 according to the first embodiment (Fig. 1(a)). Let each of the regions 11, 13, 15, 17 or each of the rods 111 (sub regions) constituting the regions 11, 13, 15, 17 be GeO₂-doped silica glass, and the refractive index n₁ in the regions 11, 13, 15, 17 at a wavelength of 1.08 µm be 1.4785. Let each of the regions 12, 14, 16, 18 or each of the rods 112 (sub regions) constituting the regions 12, 14, 16, 18 be pure silica glass, and the refractive index n₂ in the regions 12, 14, 16, 18 at the wavelength of 1.08 µm be 1.4495. Here, in order for the phase of light transmitted through each of the regions 11, 13, 15, 17 in a direction along the center axis AX and the phase of light transmitted through each of the regions 12, 14, 16, 18 in the direction along the center axis AX to yield a difference therebetween corresponding to a half wavelength, it will be sufficient if the thickness D of the phase plate 10 (the length of the phase plate 10 in the direction along the center axis AX) is 18.6 (= 1.08/2/(1.4785 - 1.4495)) µm.

The phase plate 10 manufactured as in the foregoing has a function on a par with that of the phase plate disclosed in Patent Document 1, but is easy to manufacture such as to have a desirable characteristic unlike the phase plate disclosed in Patent Document 1. It is not required for the phase plate 10 according to the first embodiment to have any recess on a main face (corresponding to the light entrance surface 10a or light exit surface 10b) of a silica glass sheet, whereby each of the light entrance surface 10a and light exit surface 10b can be made flat. Therefore, the phase plate 10 is easy to manufacture and handle. The thickness of the phase plate 10 according to the first embodiment, which is 10 times that of the phase plate disclosed in Patent Document 1, is still sufficiently thin in practice and can lower the management precision, which is directly related to the phase precision, by 10 times or more.

When the silica rods 111 comprised of GeO₂-doped glass having the refractive index n₁ of 1.4524 and the rods 112 comprised of pure silica glass having the refractive index n₂ of 1.4495 are used, the thickness D of the phase plate 10 (the length of the phase plate 10 in the direction along the center axis AX) is 186.2 (= 1.08/2/(1.4524 - 1.4495)) µm, which is 10 times as thick as that in the example mentioned above. However, it can further lower the management precision of the thickness D by 10 times, whereby the phase precision will improve by 10 times if the management precision of the thickness D is kept at the same level.

In order for the phase plate 10 according to the first embodiment to achieve a thickness on a par with that of the phase plate disclosed in Patent Document 1, it will be sufficient if the hollow glass pipes are used in place of the rods comprised of pure silica glass, and rods comprised of pure silica glass in place of the rods comprised of GeO₂-doped silica glass.

### (Second Embodiment)

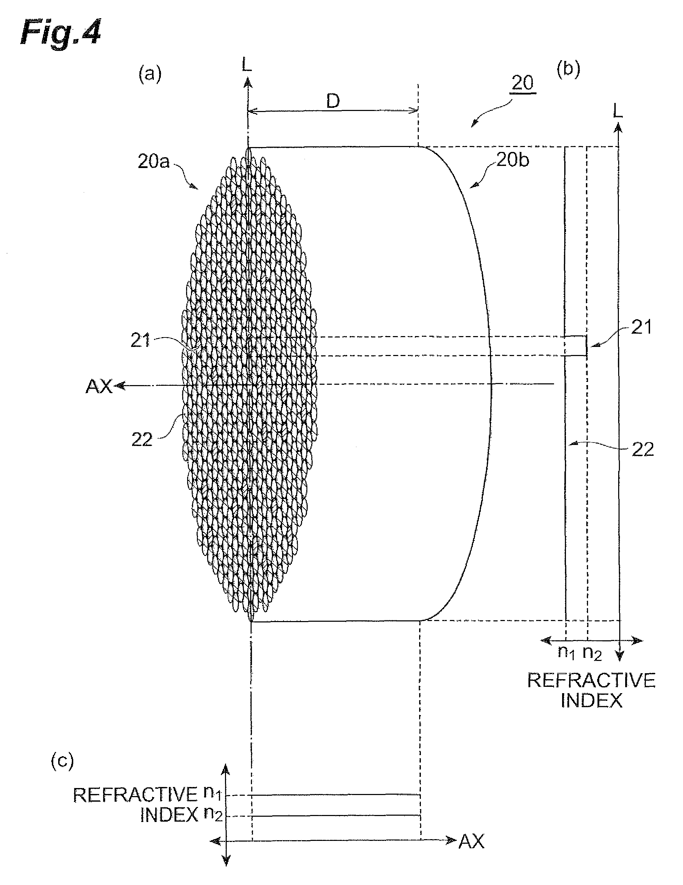

The second embodiment will now be explained. Fig. 4 is a view showing the structure of the second embodiment of the phase plate according to the present invention. In particular, Fig. 4(a) is a perspective view showing the structure of a phase plate 20 according to the second embodiment, Fig. 4(b) is a refractive index profile of the phase plate 20 along a line L in a cross section perpendicular to a center axis AX, and Fig. 4(c) is a refractive index profile of the phase plate 20 in a direction along the center axis AX. The phase plate 20 shown in Fig. 4(a) is substantially shaped like a circular cylinder with a thickness D while having a light entrance surface 20a and a light exit surface 20b which oppose each other. The phase plate 20 has a fixed refractive index in a direction along the center axis AX of the circular cylinder, while plural regions 21 sequentially arranged from the center randomly exist while being surrounded by regions 22 in a cross section perpendicular to the center axis (i.e., a plane which is parallel to the light entrance surface 20a and light exit surface 20b). The regions 22 have a refractive index n₁, while the regions 21 have a refractive index n₂ (≠ n₁).

Therefore, the refractive index profile along the line L on the light entrance surface 20a has a form in which areas of the refractive index n₂ indicating the regions 21 randomly appear in an area of the refractive index n₁ indicating the region 22 as shown in Fig. 4(b). On the other hand, as shown in Fig. 4(c), the refractive index profile in the direction along the center axis AX has a form in which the refractive index is fixed in the direction along the center axis AX whether the center axis AX penetrates through the regions having the refractive index n₁ or the regions having the refractive index n₂.

Preferably, at least a part of each of the regions 21 and 22 is comprised of silica glass. Preferably, the refractive index difference between the regions 21, 22 is set according to whether or not there is silica glass, whether or not there is an additive to silica glass, or a difference in the concentration of the additive in silica glass.

Preferably, each of the regions 21, 22 is an assembly of plural sub regions having a fixed refractive index in both of the direction along the center axis AX and the cross section. For example, each of the regions 21, 22 may be an assembly of sub regions comprised of silica glass and sub regions constituted by a gas such as air in gaps between the former sub regions. When manufactured by hollow pipes, each of the regions 21, 22 may be an assembly of sub regions constituted by material parts of the hollow pipes and sub regions constituted by a gas such as air within the hollow pipes (inner spaces of the hollow pipes).

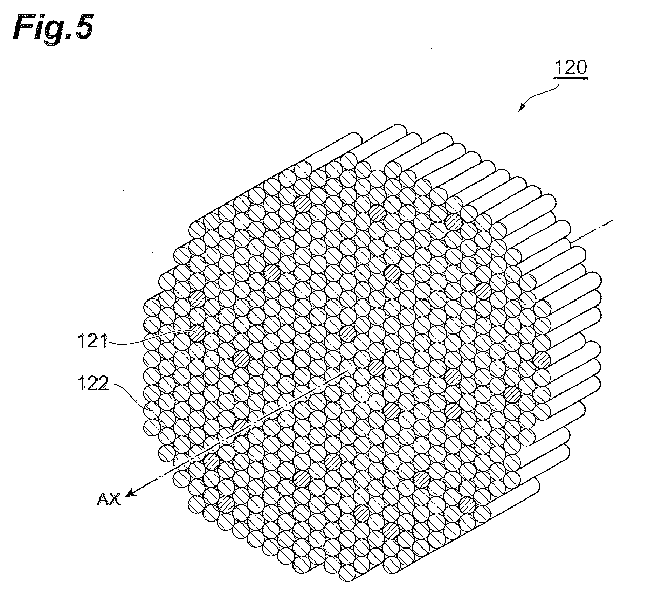

The phase plate 20 according to the second embodiment can be manufactured according to the flowchart shown in Fig. 2. Fig. 5 is a view for explaining the assembling step S1 in a method for manufacturing the phase plate according to the second embodiment and shows a cross section perpendicular to the longitudinal direction of the assembly 120 formed by the assembling step S1. The structures of the elongated body and phase plate obtained by the other manufacturing steps are the same as those shown in Figs. 3(b) and 3(c).

The assembling step S1 bundles plural rods 121 having the uniform refractive index n₁ in the longitudinal direction (coinciding with the center axis AX) and plural rods 122 having the uniform refractive index n₂ in the longitudinal direction. That is, plural rods 121, 122 are bundled such that the refractive index profile in a cross section perpendicular to the longitudinal direction is substantially similar to the refractive index profile in the cross section of the phase plate 20 (Fig. 4(b)), whereby the assembly 120 is formed.

Preferably, in the assembly 120, the bundled plural rods 121, 122 are accommodated within an assembling pipe. The plural rods 121, 122 preferably have the same outer diameters and preferably are close-packed. The plural rods 121, 122 are comprised of transparent materials such as silica glass, for example.

The elongating step S2 elongats the assembly 120, in which the plural rods 121, 122 were bundled in the assembling step S1, in the longitudinal direction (coinciding with the center axis AX) in a state softened by heating as with the assembly 110 shown in Fig. 3(b). That is, both ends of the assembly 10 are elongated in directions opposite to each other, respectively, whereby an elongated body is formed. The cutting step S3 cuts the elongated body formed in the elongating step S2 along a plane perpendicular to the longitudinal direction (see Fig. 3(c)). This yields a phase plate element (corresponding to the phase plate element 110b in Fig. 3(c)) with a thickness D1 (> D) having the light entrance surface 20a and light exit surface 20b opposing each other. Here, taking account of the reduction in thickness during the polishing step S4 subsequent thereto, the phase plate element 110b having the thickness D1 is cut out such as to attain the desirable thickness D after being polished. The polishing step S4 optically polishes the cut surfaces (to become the light entrance surface 20a and light exit surface 20b, respectively) of the phase plate element cut out in the cutting step S3. That is, each of the light entrance surface 20a and light exit surface 20b of the phase plate 20 finally obtained through the polishing step S4 becomes a flat surface.

For example, the following assumes a case where a phase plate having a function on a par with that of the phase plate disclosed in Patent Document 2 is accomplished by the phase plate 20 according to the second embodiment. Let the regions 21 or the rods 121 (sub regions) constituting the regions 21 be fluorine-doped silica glass, and the refractive index n₁ in the regions 21 at a wavelength of 200 nm be 1.4350. Let the regions 22 or the rods 122 (sub regions) constituting the regions 22 be fluorine-doped silica glass, and the refractive index n₂ in the regions 22 at a wavelength of 200 nm be 1.4452. Here, the length of each of the regions 21, 22 is set (so as to correspond to the thickness D of the phase plate 20) such that the difference between the respective optical path lengths of light transmitted therethrough in a direction along the center axis AX is longer than the coherent length of a light source.

The phase plate 20 manufactured as in the foregoing has a function on a par with that of the phase plate disclosed in Patent Document 2, but is easy to manufacture such as to have a desirable characteristic unlike the phase plate disclosed in Patent Document 2. The phase plate 20 manufactured as in the foregoing is excellent in productivity, since it can be mass-produced at once by slicing a single elongated body into appropriate thicknesses instead of inducing refractive index changes by laser beam irradiation.

When manufacturing each of the phase plates 10, 20 according to the first and second embodiments, an elongated body (rod or pipe) formed through the assembling step S 1 and elongating step S2 may be subjected to the assembling step S 1 and elongating step S2 again before the cutting step S3 (and the polishing step S4 if necessary). Thus repeating the assembling step S1 and elongating step S2 twice or more can accomplish a phase plate having a complicated refractive index distribution in a cross section with a high precision.

### Reference Signs List

10, 20...phase plate; and 11. to 18, 21, 22...region.

## Claims

1. A phase plate exhibiting a fixed refractive index in a direction along a predetermined axis, the phase plate having plural regions whose boundaries are distinguished by a difference between refractive indexes in a cross section perpendicular to the predetermined axis.

2. A phase plate according to claim 1, wherein each of the plural regions is an assembly of plural sub regions each having a fixed refractive index in both of the direction along the predetermined axis and the cross section.

3. A phase plate according to claim 1, wherein at least a part of each of the plural regions is comprised of silica glass.

4. A phase plate according to claim 3, wherein the refractive index difference between adjacent regions in the plural regions is set according to whether or not there is silica glass, whether or not there is an additive to silica glass, or a difference in the concentration of the additive in silica glass.

5. A phase plate manufacturing method, comprising:
an assembling step of bundling plural members, each having a rod or pipe form and exhibiting a fixed refractive index along a longitudinal direction thereof;
an elongating step of longitudinally elongating the plural members bundled in the assembling step while softening the members by heating, so as to form an elongated body; and
a cutting step of cutting the elongated body formed in the elongating step along a plane perpendicular to the longitudinal direction, so as to make the phase plate according to any one of claims 1 to 4.

## Amended claims

### Amended claims under Art. 19.1 PCT

**1.** (Amended) A phase plate in which phase difference between input light and output light exhibits a predetermined dictribution in a coross section perpendicular to an optical axis serving as a predetermined axis, the phase plate exhibiting a fixed refractive index in a direction along the predetermined axis and having plural regions whose boundaries are distinguished by a difference between refractive indexes in the cross section perpendicular to the predetermined axis.

**2.** (Original) A phase plate according to claim 1, wherein each of the plural regions is an assembly of plural subregions each having a fixed refractive index in both of the direction along the predetermined axis and the cross section.

**3.** (Original) A phase plate according to claim 1, wherein at least a part of each of the plural regions is comprised of silica glass.

**4.** (Original) A phase plate according to claim 3, wherein the refractive index difference between adjacent regions in the plural regions is set according to whether or not there is silica glass, whether or not there is an additive to silica glass, or a difference in the concentration of the additive in silica glass.

**5.** (Amended) A phase plate according to claim 1 wherein the plural regions are concentrically arranged in the cross section.

**6.** (New) A phase plate according to claim 1, wherein the plural region are constituted by assembling plural members each having a rod or pipe form.

**7.** (New) A phase plate manufacturing method of amufacturing a phase plate according to any one of claims 1 to 6, comprising:
an assembling step of bundling plural members with two or more types of refractive index, each having a rod or pipe form and exhibiting a fixed refractive index along a longitudinal direction thereof;
an elongating step of longitudinally elongating the plural members bundled in the assembling step while softening the members by heating, so as to form an elongated body; and
a cutting step of cutting the elongated body formed in the elongating step along a plane perpendicular to the longitudinal direction.
